# EUROPEAN PATENT SPECIFICATION

(11) **EP 2 094 608 B1**
(45) Date of publication and mention of the grant of the patent: **21.03.2018**
(21) Application number: 07824453.0
(22) Date of filing: 05.11.2007
(51) Int. Cl.: C01F 5/14, C09C 1/02, C09K 21/02, H01B 7/295, C08K 3/22

(54) **GRINDING AND BENEFICIATION OF BRUCITE**
MAHLEN UND AUFBEREITEN VON BRUCIT
MOULAGE ET VALORISATION DE BRUCITE

(30) Priority: 06.11.2006 GB 0622106
(43) Date of publication of application: 02.09.2009
(73) Proprietor: Imerys Minerals Limited, Par. Cornwall PL24 2SQ (GB)
(72) Inventor: WINDEBANK, Mark Barry, St. Blazey, Par Cornwall PL24 2JJ (GB); SKUSE, David Robert, Truro, Cornwall TR1 1BH (GB); PALM, Scott, Alpharetta, GA 30004 (US); HOOPER, Jeremy John, Bodmin, Cornwall PL30 5ED (GB)
(74) Representative: Rushton, David John
(86) International application number: PCT/GB2007/004217
(87) International publication number: WO 2008/056121

(56) References cited:
- WO-A-2005/077829
- GB-A- 2 082 554
- US-A- 4 424 124
- US-A- 4 780 297
- US-A- 5 154 767
- US-B1- 6 552 112
- DATABASE WPI Week 200602 Derwent Publications Ltd., London, GB; AN 2006-013911 XP002471334 & JP 2005 330343 A (MIZUSAWA CHEM IND CO LTD) 2 December 2005 (2005-12-02)
- DATABASE WPI Week 200707 Derwent Publications Ltd., London, GB; AN 2007-058401 XP002471335 & CN 1 814 698 A (LV S) 9 August 2006 (2006-08-09)
- DU GAO-XIANG,ZHENG SHUI-LIN,LI YANG,SI JI-CHUN: "STUDY ON PREPARATION OF SUPER-FINE POWDER BY BALL-STIRRING MILL", MINING AND METALLURGY, vol. 04, 2003, CNKI ISSN: 1005-7854 Retrieved from the Internet: URL:http://en.cnki.com.cn/Article_en/CJFDT OTAL-KYZZ200304016.htm> [retrieved on 2013-03-13]

## Description

### Field of the Invention

The present invention relates to methods of grinding and beneficiating natural magnesium hydroxide, also known as brucite. The invention also relates to methods of preparing compositions, particularly, but not exclusively, polymers, which include ground, beneficiated particulate brucite.

### Background of the Invention

Particulate magnesium hydroxide has a wide range of uses. In particular, it is used as a filler material in a variety of applications.

PCT Patent Application No. WO-A-2005/077829, as well as the publications referred to therein and in the published International Search Report thereon, describe ground particulate magnesium hydroxide filler materials and their uses.

The method described in WO-A-2005/077829 for preparing particulate magnesium hydroxide involves grinding brucite in contact with an aqueous medium in the presence of at least one particulate grinding medium under conditions such that the energy input is in excess of about 20 kWh/tonne.

The fineness of the particulate magnesium hydroxide derived from brucite is also an important factor in its utility. It is desirable that particulate magnesium hydroxide derived from brucite is ground before use to reduce the particle size.

It is also desirable to minimise the occurrence of asbestos and other mineral fibres in ground brucite.

As is known, coarse filler particles in polymers can serve as sites for the generation of cracks that can reduce the impact strength of the polymer (see, e.g., "Toughening of Polypropylene by CaCO3 : Effect of Particle Size and Surface Coating", D. A. Taylor and C. D. Paynter, Polymat 1994 - Toughening of Plastics III, Conference Proceedings, London, 19-22 September 1994, p.628-38). It is therefore also desirable to classify ground particulate magnesium hydroxide to reduce the top size of the particles.

The brightness of a filler material is an important factor in its utility. It is desirable that particulate magnesium hydroxide derived from brucite is brightened before use.

### Brief Description of the Invention

The present invention is defined in and by the appended claims, as properly construed according to law.

According to a first aspect of the present invention, there is provided a method for preparing particulate brucite comprising grinding and beneficiating particulate brucite wherein the ground beneficiated particulate brucite has a d₉₀ of less than or equal to about 6.4µm as measured by laser light scattering.

Beneficiation of the brucite may take place before and/or during and/or after the particulate brucite is ground. Beneficiation may result in the concentration of brucite being increased and/or an improvement in one or more properties such as brightness. This increase in concentration may be due to the removal of material other than brucite.

The resultant particulate brucite has a d₉₀ less than or equal to about 6.4µm as measured by laser light scattering and preferably a d₅₀ less than or equal to about 0.5µm, for example, about 0.4 to 0.5µm, as measured by laser light scattering.

The brucite to be ground may have a top size of particles which is coarser than a desired top size, and may be ground in contact with an aqueous medium in the presence of at least one particulate grinding medium under conditions such that the energy input is in excess of about 20kWh/tonne, wherein the particulate brucite having a top size of particles which is coarser than the desired top size is present in a weight excess relative to the water of the aqueous medium.

The ground particulate brucite may have a d₉₀ less than or equal to about 2µm as measured by laser light scattering and a d₅₀ less than or equal to about 0.5µm as measured by laser light scattering.

The laser light scattering method for measuring d₉₀ used herein is performed on a CILAS instrument. The sedimentation method, referred to elsewhere in this specification, is performed on a SEDIGRAPH 5100 machine as supplied by Micromeritics Corporation, USA.

The ground particulate brucite may comprise less than about 0.1, for example less than about 0.05, for example less than about 0.01, for example less than about 0.003, for example less than about 0.002, for example less than about 0.001, asbestos fibres or other mineral fibres per ml of air at a total dust level of 10mg/m³. The term asbestos includes one or more of the following minerals: crocidolite, amosite, chrysotile, fibrous actinolite, fibrous anthophyllite or fibrous tremolite. The levels of asbestos present are measured in accordance with the following procedure. 1g of the brucite sample is weighed and washed into a 100ml volumetric flask using 50:50 double distilled water : methanol solution and diluted to 100mls with double distilled water. The sample is then thoroughly dispersed using an ultrasonic bath and shaking, before diluting the suspension using a pipette to a total of 10,000 times using freshly prepared double distilled water as follows:-
1^{st} dilution (A): 5ml of suspension is diluted to 100ml = 20 times dilution;
2^{nd} dilution (B): 2ml of suspension 'A' is diluted to 100ml (50 times) = total dilution of 1,000 times;
3^{rd} dilution (C): 10ml of suspension 'B' is diluted to 100ml (10 times) = total dilution of 10,000 times.

During this dilution process, the pipette needs to be rinsed through, into the flask, with double distilled water. This ensures that any fibrous material adhering to the sides of the pipette is transferred to the flask. Thorough mixing is carried out at each stage. A 2ml aliquot of the final diluted suspension is then filtered through a 13mm diameter, 0.4µm pore size, Nuclepore polycarbonate membrane. As with the earlier dilutions, the pipette needs to be rinsed into the filter to ensure all the fibrous material is transferred. The residue filtered off will be within a 5mm disc in the centre of the membrane. This is allowed to air dry before being mounted on a solid carbon disc, fixed to an aluminium stub, using silver conducting paint (the solid carbon disc prevents any non-sample x-ray contributions during analysis which could be detected through the thin membrane). The sample is then gold sputtered for 60seconds at ∼10mA before being placed in the microscope. The microscope conditions are set to suit both the analysis and comfortable viewing of the sample, for example, the probe current = 6x10⁻¹⁰A, working distance (W.D.) = 15mm, operating voltage = 15kV and the magnification = 1500 times. The centre portion of the membrane holding the acid insoluble residue is then systematically scanned to detect any fibres of asbestos. Any asbestos fibres are noted and reported as the number of fibres per ml of air at a total dust level of 10mg/m³. Due to the time taken to evaluate these specimens, approximately only half of the 5mm disc is examined. This result is then multiplied by 2 to achieve the value for the whole disc. For a particle to be regarded as a fibre, it has to be >5µm in length, <3µm wide and have an aspect ratio of >3 to 1.

The ground particulate brucite may comprise less than about 1wt%, for example less than about 0.5wt%, for example less than about 0.1wt%, for example less than 0.05wt% iron. The levels of iron present are acid soluble iron and are measured quantitatively using wet chemical analysis methods. More specifically, the amounts of iron present are measured by the Inductively Coupled Plasma (ICP) technique and the results are expressed as a weight % of the whole sample.

The ground particulate brucite may possess a moisture pick up value over 7 days of less than about 15%, for example less than about 10% and most preferably less than about 6%. The moisture pick up is measured gravimetrically. More specifically, the brucite is dried for 2 hours at 80°C in a vacuum oven. The material is allowed to cool down in a desiccator and weighed. The sample is then exposed to a controlled environment, at 23°C and 97% relative humidity and the weight gain recorded after 7 days.

The methods according to the present invention may comprise classifying the particulate brucite including top size particles in a certain size range (for example 15 to 18µm or 12 to 18µm as measured by laser light scattering) so as to remove said top size particles in the said certain size range, the method comprising suspending the material in an aqueous medium to form a particulate suspension of the brucite, introducing a stream of the said particulate suspension into a hydrocyclone apparatus to create a vortex flow in the apparatus, and removing from the apparatus a first discharged stream ("underflow" or "U/F") comprising relatively large particles and a second discharged stream ("overflow" or "O/F") comprising relatively small particles, and recovering the classified particulate magnesium hydroxide free of the said top size particles from the second discharged stream. The aqueous suspension may, if desired, include dispersing agents or other additives to assist the separation. We have found, however, that it may not be necessary to use a dispersing agent.

The ground particulate brucite is beneficiated in order to improve its brightness, wherein the beneficiation comprises dispersing the ground or pre-ground particulate brucite in a fluid carrier medium to produce a dispersion; introducing the dispersion into a magnetic field of sufficient field strength to magnetise ferric components of the particulate brucite; removing the dispersion from the magnetic field and placing the dispersion in sufficiently close proximity to a magnetic or magnetisable material that the said ferric components of the dispersion are concentrated in the vicinity of the magnetic or magnetisable material; and thereafter separating the said concentrated ferric components from the remainder of the dispersion.

The methods of preparing a ground particulate brucite according to the present invention may further comprise combining said brucite optionally with one or more other particulate inorganic materials in order to provide a particulate filler material for use in a polymeric composition. The filler is preferably provided for use in the form of a substantially dry powder. The particulate filler material may suitably consist essentially of a ground particulate brucite made according to the present invention and one or more other particulate inorganic materials. The one or more other particulate materials may suitably have flame retardant properties and be present with the particulate brucite in a flame-retardant amount.

The filler may suitably be present in an amount of between about 1% and about 90%, for example between about 10% and about 90%, by weight of the filled polymer. The filler is preferably present in the polymer in a flame-retarding amount, to provide a flame-retardant polymeric composition suitable, for example, for use as a sheath, coating or housing for an electrical product. The polymer composition may be formed into an article. The article may be a sheath, coating or housing for an electrical product, for example a sheath component of an electrical cable.

The polymeric composition may be formed by mixing the components of the composition, the polymer component being present for the mixing as liquid or particulate solid, and optionally one or more precursors of the polymer.

### Detailed Description of the Invention

The laser light scattering measurement method used herein is a well known particle size analysis using a CILAS (Compagnie Industrielle des Lasers) 1064 instrument. The CILAS instrument determines the particle size distribution of a sample by passing a laser beam through a dilute suspension of sample particles and measuring the resultant diffraction pattern of the laser beam. The diffraction pattern is then analyzed using mathematical algorithms (Fraunhofer) based on optical theory to calculate the particle size distribution of the sample. The CILAS 1064 instrument was equipped with a wet sampling device and dual laser detection system to allow accurate measurement of very fine particles. The CILAS 1064 instrument normally provides particle size data to two decimal places.

The parameter d₉₀ as measured by CILAS is the particle equivalent spherical diameter (esd), as measured on the CILAS (Compagnie Industrielle de Lasers) 1064 or corresponding instrument, at which there are 90% by volume of the particles which have an esd less than the d₉₀ value.

Unless otherwise stated, the method for measuring d₅₀ used herein is also performed on a CILAS 1064 instrument. This parameter d₅₀ is the mean or average particle equivalent spherical diameter (esd), that is to say, the esd at which there are 50% by volume of the particles which have an esd less than the d₅₀ value.

The starting particulate brucite is preferably obtained from coarsely comminuted brucite. Brucite may occur in substantially pure form or, more commonly, may be found in combination with other minerals such as calcite, aragonite, talc or magnesite, often in stratified form between silicate deposits, in chlorite, or in schists. The term "brucite" used herein includes all forms and occurrences of brucite, and processed (e.g. comminuted) derivatives thereof.

The method may suitably be performed generally as described in WO-A-2005/077829. When the brucite to be ground has a top size of particles which is coarser than a desired top size, and is ground in contact with an aqueous medium in the presence of at least one particulate grinding medium under conditions such that the energy input is in excess of about 20kWh/tonne, and the particulate brucite having a top size of particles which is coarser than the desired top size is present in a weight excess relative to the water of the aqueous medium, then for example, the starting particulate brucite may be present in at least a 1.4-fold weight excess, for example in at least a 1.6-fold weight excess, for example in at least a 1.8-fold weight excess, for example in at least a two-fold weight excess, for example in at least a 2.2-fold weight excess, for example in at least a 2.5-fold weight excess, relative to the water. Preferably, the starting particulate brucite should be present in up to about a three-fold weight excess, relative to the water. If desired, water can be added as desired, even to the extent that, towards the end of the grinding, the water becomes in a weight excess relative to the particulate brucite.

The energy input is suitably in excess of about 50kWh/tonne, for example in excess of about 100kWh/tonne, for example in excess of about 150kWh/tonne, for example in excess of about 200kWh/tonne, for example in excess of about 250kWh/tonne, for example in excess of about 300kWh/tonne, for example in excess of about 350kWh/tonne. The upper limit of energy input is generally difficult to specify, as the particle size will generally continue to reduce, albeit progressively more slowly, as the energy input is increased. Generally speaking, it should not be necessary for the energy input to exceed about 2000kWh/tonne, in order to produce useful particulate brucite or filler material according to the present invention.

The particulate grinding medium may be of a natural or a synthetic material. The grinding medium may comprise balls, beads or pellets of any hard mineral, ceramic or metallic material; such materials may include, for example, alumina, zirconia, zirconium, silicate, aluminium silicate or the mullite-rich material which is produced by calcining kaolinitic clay at a temperature in the range of from 1300°C to 1800°C. Alternatively, particles of natural sand of a suitable particle size may be used.

Generally, the type of, and particle size of, grinding medium to be selected for use in the invention may be dependent on the properties, such as, e.g. the particle size and the chemical composition of the feed of natural magnesium hydroxide to be ground. Preferably, the particulate grinding medium comprises particles having an average diameter in the range of from 0.1mm to 6.0mm and, more preferably in the range of from 0.2mm to 4.0mm. Preferably, the grinding medium (or media) may be present in an amount of from 40% to 70% by volume of the charge; more preferably in an amount of about 60% by volume of the charge.

The particulate brucite is preferably present in suspension in the aqueous medium. In such a suspension, the relatively coarse starting brucite may preferably be present in an amount of from 5% to 85% by weight of the suspension; more preferably in an amount of from 20% to 80% by weight of the suspension. Most preferably, the coarse starting brucite may be present in an amount of about 30% to 75% by weight of the suspension.

A dispersing agent may preferably be added to the suspension prior to comminution by the method of the invention. This is desirable to reduce the viscosity of the suspension. It is preferred that a proportion (e.g. up to about 50% by weight or volume, for example about 30 to 40%) of the dispersing agent is added before or at the start of the grinding procedure, and the remainder of the dispersing agent is added in relatively small doses during the grinding procedure. The dispersing agent may be, for example, a water soluble condensed phosphate, a water soluble salt of a polysilicic acid or a polyelectrolyte, for example a water soluble salt of a poly(acrylic acid) or of a poly(methacrylic acid) having a number average molecular weight not greater than 80,000. The dispersing agent may be added in the form of a dry powder or a solution, e.g. in water. As dispersing agent, sodium polyacrylate, ammonium polyacrylate or any combination thereof may particularly be mentioned. Commercially available products including these materials include Calgon (sodium hexametaphosphate), DP2695™ (sodium polyacrylate; available from Ciba Specialty Chemicals, www.cibasc.com), Jaypol 1183™ (30% sodium neutralised sodium polyacrylate, which may be further neutralised with sodium hydroxide to prepare e.g. a 70% neutralised modified form), BTC2™ (sodium polyacrylate, available from MJ Polymers, Doncaster, UK), and A40™ (ammonium polyacrylate; available from Ciba Specialty Chemicals). The amount of the dispersing agent used will generally be in the range of from 0.05 to 2.0% by weight, based on the weight of the dry particulate solid material.

The comminution is continued until the desired particle diameter is achieved, after which the particulate material is dewatered and dried. Dewatering can be accomplished via use of settling bowls, dewatering centrifuges, plate and frame presses, belt presses, rotary vacuum filters, tube presses, high pressure presses, tangential flow membranes and evaporators or some combination thereof. Drying can be accomplished via use of spray driers, flash dryers, drum dryers, shelf or hearth dryers, freeze driers and drying mills, or some combination thereof.

This high-solids grinding process according to the present invention may conveniently be performed on a small (kilogram or laboratory) scale using the apparatus and other conditions specified in WO-A-2005/077829, although preferably a higher impeller speed of at least about 1000 rpm, for example at least about 1250 rpm, for example at least about 1350 rpm, for example at least about 1450 rpm, for example about 1500 rpm, may be used. The high-solids grinding process according to the present invention may alternatively be employed on a commercial (tonne or multi-tonne) scale with appropriate scaling up from the laboratory apparatus.

The grinding process according to the present invention is found to provide relatively fine particulate magnesium hydroxide with utility as a filler material, more economically than the prior art grinding processes. Moreover, it is found that ultra fine particulate magnesium hydroxide can be readily prepared. Still further, it is found that the grinding process according to the present invention enables ground brucite to be prepared with a surprisingly low content of asbestos and other mineral fibres, leading to considerable health and safety advantages.

The dry comminuted particulate brucite may, if desired be resuspended in a liquid medium for further use. Such redispersion may typically be assisted by the use of dispersing agents. The same dispersing agents as mentioned above may suitably be used.

We have further found, surprisingly, that the fine particulate brucite prepared according to the present invention is more easily dispersed to provide a pumpable and handlable slurry of acceptably low viscosity (e.g. less than about 1100mPa.s Brookfield viscosity on dispersion, preferably less than about 650mPa.s), rising to less than about 2000MPa.s Brookfield viscosity after 1 hour, preferably less than about 1300mPa.s) than prior art ground magnesium hydroxide materials, which are typically difficult to disperse effectively.

The beneficiated particulate brucite according to the present invention may typically have an ISO brightness (violet) of greater than about 85, for example at least about 89, for example at least about 91, for example at least about 93. The ISO brightness (violet) is higher after the beneficiation has been carried out. Preferably, the ISO brightness is greater than or about one point higher, preferably greater than or about two points higher, preferably greater than or about three points higher. The ISO brightness, as expressed herein, refers to the percentage reflectance to light of a 457nm wavelength. The ISO brightness is the percentage of light reflected by a body compared to that reflected by a perfectly reflecting diffuser measured at 457nm. A Datacolour Elrepho fitted with two tungsten lamps, a gloss shield and a range of filters which includes one at a nominal setting of 457nm and one at a nominal setting of 571nm are used. A test surface is produced by pulverizing a dried material, for example using an Imerys pulveriser, to disperse it completely, then compressing it under a pressure of 1.2kg cm⁻² to form a powder tablet. Drying is carried out in an oven and dryness of the sample is denoted by the absence of condensation on a piece of cool plate glass when placed in close proximity to the surface of the sample which has been removed from the oven. Suitable drying ovens include the forced circulation type which are capable of maintaining a temperature of 80°C to within 5°C. The reflectance values of this tablet are measured at two wavelengths in the visible spectrum. The measurements are made with the ultraviolet component excluded. The primary standard adopted was an ISO level 2 reflectance standard, supplied and calibrated by Physikalisch-Technische Bundesanstalt (P.T.B.), West Germany. A working standard, in this case a ceramic tile, was used to calibrate the photometer for brightness measurements which had been calibrated previously against the level 2 standard.

Yellowness is measured according to the procedure described above for the brightness measurements. The yellowness is reported as the value obtained when the reflectance at 457nm is subtracted from the reflectance at 571nm.

The d₉₀ of the ground brucite may be less than or equal to 2.0µm, for example less than or equal to 1.9µm, for example less than or equal to 1.8µm, and the d₅₀ may be less than or equal to 0.50µm, for example less than or equal to 0.48µm, for example less than or equal to 0.46µm, for example less than or equal to 0.44µm, for example less than or equal to 0.42µm, for example greater than or equal to about 0.30µm, for example about 0.40µm.

The particulate brucite may be present as a dry particulate or in dry admixture with other materials. Alternatively, for example, the particulate brucite, and optional other materials if present, may be in a liquid (e.g. aqueous) slurry or dispersion.

The level of asbestos fibres is surprising, and the preferred levels are substantially below the level measured for milled brucite Furthermore, the preferred levels are more than 100 times lower than the accepted safe limit for crysotile (0.3 fibres per ml of air at a total dust level of 10 mg/m³).

Classification according to the present invention may, for example, be carried out using a hydrocyclone, a centrifuge or via sedimentation. For classifying the particulate brucite using a hydrocyclone, then typically, the introduced stream enters the hydrocyclone tangentially and the discharged streams exit axially, in conventional manner. The top size particles may, for example, be in the size range of 15 to 18µm or 12 to 18µm as measured by laser light scattering. The aqueous suspension may, if desired, include dispersing agents (for example, those mentioned above or other additives to assist the separation. We have found, however, that it may not be necessary to use a dispersing agent. The hydrocyclone apparatus may be selected from any commercially available hydrocyclone systems for separation of particles. It is particularly suitable to use a hydrocyclone apparatus incorporating a vortex finder and spigot. The selection of an appropriate design and size of hydrocyclone can be made on known principles using reasonable testing and trialling procedures. For a discussion of a systematic approach to the selection of hydrocyclone dimensions and parameters for use in relation to the present invention, see for example Mineral Processing and Extractive Metallurgy, Vol. 112, No. 1, April 2003, pp. 19-24(6). A suitable hydrocyclone apparatus that may be used is Axsia Mozley.

The ground particulate brucite is beneficiated in order to improve its brightness and, optionally, to reduce its content of asbestos or other mineral fibres. This comprises dispersing the particulate brucite in a fluid carrier medium to produce a dispersion; introducing the dispersion into a magnetic field of sufficient field strength to magnetise ferric components of the particulate brucite; removing the dispersion from the magnetic field and placing the dispersion in sufficiently close proximity to a magnetic or magnetisable material that the said ferric components of the dispersion are concentrated in the vicinity of the magnetic or magnetisable material; and thereafter separating the said concentrated ferric components from the remainder of the dispersion.

The fluid carrier may be a gas, liquid or flowable solid. An aqueous liquid dispersion is preferred. Suitable dispersing agents may be used if desired, as described above. The magnetic field may be produced by any suitable means. For example, the magnetic field may be produced by an electromagnet, for example a super-conducting magnet. The magnetic field may have a field strength of greater than about 1 Tesla, for example greater than about 2 Tesla, for example greater than about 3 Tesla, for example greater than about 4 Tesla, for example less than about 7 Tesla. Preferably, the magnetic field strength is about 5 Tesla. The magnetic field is of sufficient strength to magnetise magnetisable particles in the dispersion. The magnetisation effect may be of permanent or temporary effect.

The dispersed brucite may be static in the magnetic field or may be passed through the magnetic field in a flow. Where a flow system is used, the flow may take place at any suitable rate, and in any suitable way. For example, the dispersion may be passed through the magnetic field at a flow rate of greater than about 10ml s⁻¹, for example greater than about 15ml s⁻¹, for example greater than about 20ml s⁻¹, for example about 25ml s⁻¹.

The magnetic or magnetisable material may suitably be a ferromagnetic material of any suitable type and in any suitable configuration. For example, the ferromagnetic material may comprise iron, nickel, cobalt or any combination thereof. For example, the ferromagnetic material may be an alloy comprising iron, nickel, cobalt or any combination thereof. The alloy may also comprise other materials, for example carbon. The ferromagnetic material may preferably be formed into any suitable arrangement for contacting with the magnetised dispersion such that the magnetised particles in the dispersion adhere magnetically to the ferromagnetic material. Arrangements which result in a large contact surface area between the dispersion and the ferromagnetic material are therefore particularly favoured. For example, the ferromagnetic material may be in the form of a sieve or mesh or a plurality of sieves and/or meshes. For example, a packed bed may be used comprising particles which comprise a ferromagnetic material, for example particles which are coated with a ferromagnetic material, for example particles which consist essentially of a ferromagnetic material. For example, the ferromagnetic material may be disposed as elongate elements, whose length may be substantially greater than their greatest transverse dimension. The elongate elements may be in an ordered arrangement, for example woven, coiled and/or aligned, or a disordered arrangement, for example entangled and/or matted.

The step of placing the dispersion in sufficiently close proximity to a magnetic or magnetisable material that the said ferric components of the dispersion are concentrated in the vicinity of the magnetic or magnetisable material may be carried out in a static or moving arrangement. The moving arrangement involves relative movement of the dispersion and the magnetic or magnetisable material, although it is not necessary that both are individually moving. It is preferred that the dispersion is moving and the magnetic or magnetisable material is static. It is preferred that the dispersion is in direct contact with the magnetic or magnetisable material in a container or apparatus.

After the ferric components of the dispersion have been concentrated as described above, the ferric components are separated from the remainder of the dispersion. In the preferred arrangement described above, the ferric-depleted dispersion flows on and away from the ferric components adhered to the magnetic or magnetisable (e.g ferromagnetic) material.

The ferric components may subsequently be removed from the ferromagnetic material by any suitable means. The magnetised particles may be removed by mechanical agitation, or by thermal treatment or by contacting the ferromagnetic material to which the magnetised particles have adhered with a suitable liquid wash, for example water. Preferably, the magnetised particles are magnetised temporarily such that they adhere to the ferromagnetic material during the contacting of the dispersion with the ferromagnetic material but become disadhered easily after the contacting has been completed.

The ferromagnetic material may be disposed in any suitable vessel. The vessel may, for example, itself be of a ferromagnetic material. The vessel may be provided with inlets and outlets and appropriate valves and control mechanisms as may be required to facilitate the beneficiation process. For example, the vessel may have an inlet and an outlet. The inlet and/or the outlet may be provided with a valve or other means for controlling the flow rate of material through the vessel. The valve(s) or other means may be adapted to be controlled remotely, for example by electronic or computer control equipment.

We have found that the above method can lead to a surprising enhancement of the brightness of ground brucite.

Any suitable initial comminution method, such as described generally below may be used in the methods of the present invention.

For example, coarse brucite may be crushed and coarsely ground using well-known procedures, and then subjected to comminution to produce the particulate brucite or filler material to be processed according to the invention. In one preferred embodiment, brucite may be crushed and dry ground to produce a flour-like material suitable as a feed for comminution to produce the particulate brucite or filler material.

Where it is desired to prepare a filler material in accordance with the present invention, in which the particulate brucite is present with one or more other particulate inorganic material, the different materials may be processed together, e.g. for comminution, surface treatment, beneficiation or combinations thereof. Alternatively, the different material may also be blended together following comminution, surface treatment or beneficiation.

The comminution is typically wet grinding or milling. Where grinding is used, it is preferably carried out in the presence of a suitable particulate grinding medium. The particulate grinding medium may be of a natural or a synthetic material. The grinding medium may comprise balls, beads or pellets of any hard mineral, ceramic or metallic material; such materials may include, for example, alumina, zirconia, zirconium, silicate, aluminium silicate or the mullite-rich material which is produced by calcining kaolinitic clay at a temperature in the range of from 1300°C to 1800°C. Alternatively, particles of natural sand of a suitable particle size may be used. In one preferred embodiment, a sand or ceramic grinding medium is used in a wet grinding procedure, to achieve the desired particle size.

Generally, the type of, and particle size of, grinding medium to be selected for use in the invention may be dependent on the properties, such as, e.g. the particle size and the chemical composition of the feed of brucite to be ground. Preferably, the particulate grinding medium comprises particles having an average diameter in the range of from 0.1mm to 6.0mm and, more preferably in the range of from 0.2mm to 4.0mm. Preferably, the grinding medium (or media) may be present in an amount of from 40% to 70% by volume of the charge; more preferably in an amount of about 60% by volume of the charge.

The coarse brucite to be ground is preferably present in an aqueous suspension. In such a suspension, the coarse brucite may preferably be present in an amount of from 5% to 85% by weight of the suspension; more preferably in an amount of from 10% to 80% by weight of the suspension. Most preferably, the brucite may be present in an amount of about 10% to 75% by weight of the suspension e.g. about 10 to 25%. One or more dispersants, such as those described above, may be used to assist the suspension.

Subsequent conventional treatments may include dewatering and drying, as described generally above.

With regard to those aspects of the invention relating to the formation of a polymer composition, the polymer comprises any natural or synthetic polymer or mixture thereof. The polymer may, for example, be thermoplastic or thermoset. The term "polymer" used herein includes homopolymers and copolymers, blends, as well as crosslinked and/or entangled polymers and elastomers such as natural or synthetic rubbers and mixtures thereof. Specific examples of suitable polymers include, but are not limited to, polyolefins of any density such as polyethylene and polypropylene, polycarbonate, polystyrene, polyester, acrylonitrile-butadienestyrene copolymer, nylons, polyurethane, ethylene-vinylacetate polymers, polyvinyl chloride, and any mixture thereof, whether cross-linked or un-cross-linked.

The term "precursor" as applied to the polymer component will be readily understood by one of ordinary skill in the art. For example, suitable precursors may include one or more of: monomers, cross-linking agents, curing systems comprising cross-linking agents and promoters, or any combination thereof.

The particulate inorganic filler is suitably present in the polymer composition according to the present invention in a flame retardant amount, suitably in an amount in the general loading range between about 5% and about 80% by weight, and more preferably between about 9% and about 50% by weight.

The particulate brucite may be present - for example in the filler material as such or in the polymeric composition - with one or more other particulate inorganic materials.

The other particulate inorganic material, when present, may, for example, be selected from phosphorus-containing compounds (e.g. organophosphates or phosphorus pentoxide), boron-containing compounds (e.g. boric acid and metal borates such as sodium borate, lithium metaborate, sodium tetraborate or zinc borate), metal salts, metal hydroxides (e.g. gibbsite, ground or precipitated alumina trihydroxide (ATH), synthetic magnesium hydroxide), metal oxides (e.g. lead dioxide, antimony oxide), hydrates thereof (e.g. sodium tetraborate decahydrate), mineral sources of any of the foregoing whether in native or at least partially refined form, organoclays (e.g. smectite clays such as bentonite, montmorillonoids such as montmorillonite, talc, pyrophilite, hectorite, vermiculite, perlite, saponite and ion-exchanged forms thereof, suitably ion-exchanged forms incorporating cations selected from quaternary ammonium and alkylimidazolium ions), kaolin clays, other non-kaolin clays (for example as described in Chapter 6 of "Clay Colloid Chemistry" by H. van Olphen, (Interscience, 1963); more specifically: one or more of; illites; other kaolinites such as dickite, nacrite and halloysite; chlorites; attapulgite and sepiolite), and any combination thereof, typically boric acid, a metal borate and any combination thereof.

The one or more other inorganic materials may suitably have flame-retardant properties and be present with the particulate natural magnesium hydroxide in a flame-retardant amount. Preferred such components are ground and precipitated ATH.

The filler material or the polymeric composition made according to the present invention may include one or more other optional flame-retardant and/or non-flame-retardant components, preferably selected from conventional organic heat quenchers such as halogenated hydrocarbons (e.g. halogenated carbonate oligomers, halogenated phenyl oxides, halogenated alkylene-bis-phthalidimides and halogenated diglycyl ethers), optionally together with metal oxides (e.g. antimony oxide) and conventional additives for polymers, for example pigments, colorants, anti-degradants, anti-oxidants, impact modifiers (e.g. core-shell graft copolymers), fillers (e.g. talc, mica, wollastonite, glass or a mixture thereof), slip agents (e.g. erucamide, oleamide, linoleamide or steramide), coupling agents (e.g. silane coupling agents), peroxides, antistatic agents, mineral oils, stabilisers, flow enhancers, mould release agents (e.g. metal stearates such as calcium stearate and magnesium stearate), nucleating agents, clarifying agents, and any combination thereof.

Such components are suitably used in total amounts between about 1% and about 70% by total weight of the filler component, and more preferably between about 5% and about 50% by weight, e.g. up to about 30% by weight.

The coupling agent, where present, serves to assist binding of the filler particles to the polymer. Suitable coupling agents will be readily apparent to those skilled in the art. Examples include organic silanes or titanates such as vinyltriethoxysilane, tri-(2-methoxyethoxy)vinylsilane, vinyltriacetylsilane, tetraisopropyltitanate, tetra-n-butyl-titanate, and the like. The coupling agent is typically present in an amount of about 0.1% to about 2% by weight, preferably about 1% by weight, based on the weight of the total particulate filler.

Preparation of the polymeric compositions of the present invention can be accomplished by any suitable mixing method known in the art, as will be readily apparent to one of ordinary skill in the art.

Such methods include dry blending of the individual components or precursors thereof and subsequent processing in conventional manner.

In the case of thermoplastic polymeric compositions, such processing may comprise melt mixing, either directly in an extruder for making an article from the composition, or pre-mixing in a separate mixing apparatus such as a Banbury mixer. Dry blends of the individual components can alternatively be directly injection moulded without pre-melt mixing.

The filler material prepared according to the present invention can, where it includes more than one component, be prepared by mixing of the components thereof intimately together. The said filler material is then suitably dry blended with the polymer and any desired additional components, before processing as described above.

For the preparation of cross-linked or cured polymeric compositions, the blend of uncured components or their precursors will suitably be contacted under suitable conditions of heat, pressure and/or light with an effective amount of any suitable cross-linking agent or curing system, according to the nature and amount of the polymer used, in order to cross-link and/or cure the polymer.

For the preparation of polymeric compositions where the filler material is present *in situ* at the time of polymerisation, the blend of monomer(s) and any desired other polymer precursors, filler and any other component(s) will preferably be contacted under suitable conditions of heat, pressure and/or light, according to the nature and amount of the monomer(s) used, in order to polymerise the monomer(s) with the filler material and other component(s) *in situ.*

The polymeric compositions can be processed to form, or to be incorporated in, articles of commerce in any suitable way. Such processing may include compression moulding, injection moulding, gas-assisted injection moulding, calendering, vacuum forming, thermoforming, extrusion, blow moulding, drawing, spinning, film forming, laminating or any combination thereof. Any suitable apparatus may be used, as will be apparent to one of ordinary skill in this art.

The articles which may be formed from the compositions are many and various. Examples include sheaths for electrical cables, electrical cables coated or sheathed with the polymer composition, and housings and plastics components for electrical appliances (e.g. computers, monitors, printers, photocopiers, keyboards, pagers, telephones, mobile phones, hand-held computers, network interfaces, plenums and televisions). Fire retardant work surfaces, e.g. counter worktops, may also be formed from a flame-retardant polymeric composition according to the present invention.

The particle size fraction of ground brucite useful for fire retardant electrical components may suitably be in the range less than 106µm and greater than 38µm (-106µm +38µm). The particle size fraction of ground brucite useful for fire retardant counter worktops may suitably be in the range less than 53µm and greater than 38µm (-53µm +38µm).

### Examples of the Invention

The following non-limiting Examples are included for purposes of further explanation and illustration of the present invention.

### Example 1 - High Solids Grinding of Brucite

Large lumps of brucite were first crushed using a Glen Creston 18-501 jaw crusher to produce small chips of about 20 mm effective diameter or smaller. These chips were then passed through a Christy Norris mill to obtain a coarse powder of less than 0.5mm. The coarse powder was finally ground using a Raymond Mill so as to obtain fine brucite powder having 75wt% less than 53 µm.

### Example 1A - Experiment Starting from Kuldur Brucite

Large lumps of Kuldur brucite were first prepared as described above. Sand grinding was then carried out on a bench scale sand grinder having a shaft rotational speed of 1500rpm. BTC2 (sodium polyacrylate; approximately 40% active) was used as dispersant. For this, 18.3g of BTC2 (1% active BTC2) was dissolved in water to obtain 125g of dispersant solution. Brucite (733g) and 16-20 Carbolite™ particulate grinding medium (1.5kg) were taken in a small grinding pot. At the start, 245g of water and 37.5ml of the dispersant solution were taken. As grinding proceeded, 12ml of the dispersant solution was added every 2.5 minutes. Later, 190 ml of water was added as required. The grinding was carried out until the desired energy had been imparted. The grinder was then stopped and the mixture was tipped on to a vibrating sieve (25 mesh). The brucite slurry was collected and tested for solid content using a Sartorius Moisture Analyzer MA30™, and for viscosities using a Brookfield™ viscometer.

The ground sample had the following characteristics:
Moisture Content: 35% (65% solids);

**Viscosities:**

| | |
|---|---|
| T₀ | :1032mPa.s; |
| T₁ | :1380mPa.s; |
| T₂₄ | :1880mPa.s. |

### Fibre Level;

Milled brucite: 0.004 fibres ml⁻¹ of air at a total dust level of 10mg m⁻³;
Ground brucite: 0.001 fibres ml⁻¹ of air at a total dust level of 10mg m⁻³.

The accepted limit for chrysotile is 0.3 fibres ml⁻¹ of air.

### Example 1B - Experiment Starting form Jiguanshan Brucite

Large lumps of Jiguanshan brucite were first prepared as described above. High solids sand grinding was carried out on a bench scale sand grinder having a shaft rotational speed of 1500 rpm. Brucite (733g) and 16-20 Carbolite™ (1.5kg) were taken in a small sand grinding pot. To this, water and dispersants, or water only, was added as required through the grind, as set out in Table 1 below. The grinding was carried out until the desired energy had been imparted, as set out in Table 1A. The grinder was then stopped and the mixture was tipped on to a vibrating sieve (25 mesh). The brucite slurry was collected and tested for the parameters set out in Table 1. The solids content was measured using a Sartorius Moisture Analyzer MA30™. The surface area was measured according to the BET method using a Tristar Instrument (Micromeritics) including a Flowprep 060. For the surface area measurements, nitrogen was used as the adsorbate in conjunction with helium as the carrier. The samples were out-gassed at 180°C before testing. The d₅₀ measurements were made using a sedimentation method; and brightness as described above. Samples from test procedures 8, 9 10 and 11 were tested for viscosity at time = 0, 1 and 24 hours using a Brookfield viscometer. The results of the viscosity tests are shown in Table 1B. T₀ = viscosity at time = 0 hours; T₁ = viscosity at time = 1 hour; T₂₄ = viscosity at time = 24 hours.

The following dispersants were used for the experiment:
- Calgon™ 10% active
- BTC2™ (approx. 40% active)
- J70 (70% neutralised sodium polyacrylate) dispersant was produced by titrating Jaypol 1183™ (approx. 30% sodium neutralised) with sodium hydroxide (50 wt.% solution). When tested, the final product was found to have 69.7% neutralisation, 4.73 polyacrylate mol/kg concentration and 44.5% activity as expressed as NaPAA.

**Table 1A**

| | Experimental Procedure | Note | Total water + dispersant (g) | Grinding time (min) | Energy (kWh/ton) | d₅₀ (µm) | Surface area (m²/g) | Brightness Violet | Brightness Yellow |
|---|---|---|---|---|---|---|---|---|---|
| 1 | 73.4g Calgon, 7.32g BTC2 and 163g water mixed and added at the beginning. 263g water added during grinding. | 1% Calgon 0.4% BTC2 | 506 | 60 | 350 | N/A | N/A | N/A | N/A |
| 2 | 73.4g Calgon, 18.3g BTC2 and 152g water mixed and added at the beginning. 236g water added during grinding. | 1% active Calgon 1% active BTC2 | 480 | 52 | 350 | N/A | N/A | N/A | N/A |
| 3 | 18.3g BTC2 and 226g water mixed and added at the beginning 224g water added during grinding. | 1% active BTC2, similar to 4 | 469 | 37 | 350 | 1.13 | 14.46 | 92.5 | 2.3 |
| 4 | 18.3g BTC2 and 226g water mixed and added at the beginning. 221g water added during grinding. | 1% active BTC2, similar to 3 | 465 | 40 | 350 | 1.07 | 13.41 | N/A | N/A |
| 5 | 27.5g BTC2 and 216g water mixed and added at the beginning. 222g water added during grinding. | 1.5% active BTC2 | 466 | 43 | 350 | 1.15 | N/A | 93.0 | 2.1 |
| 6 | 18.3g BTC2 and 226g water mixed and added at the beginning. 455g water added during grinding. | Higher grinding energy | 699 | 70 | 500 | 0.82 | N/A | 92.7 | 2.3 |
| 7 | 244g water added at the beginning. 18.3g BTC2 made to 125g with water and added in 15g doses till 33 minutes. 253g water then added during grinding. | 1% active BTC2 Incremental addition of water | 622 | 45 | 350 | 1.07 | N/A | 92.7 | 2.3 |
| 8 | 244g water added at the beginning. 18.3gBTC2 made to 125g with water, of which 37.5g added in the beginning. Rest added in 15g doses till 24 minutes, 55g water added during grinding. | 1% active BTC2 Incremental addition of water, similar to 12 | 424 | 56 | 350 | 0.85 | 13.31 | 93.5 | 1.9 |
| 9 | 244g water added at the beginning. 16.5g J70 made to 125g with water, of which 37.5g added in the beginning. Rest added in 12g doses till 30minutes. 55g water added during grinding. | 1% active J70 Incremental addition of water. 9,10 & 11 are same | 424 | 46 | 350 | 1.00 | 15.59 | 93.5 | 2.0 |
| 10 | 44g water added at the beginning. 16.5g J70 made to 125g with water, of which 37.5g added in the beginning. Rest added in 12g doses till 30 minutes. 55g water added during grinding. | 1% active J70 Incremental addition of water. 9,10 & 11 are same | 424 | 42 | 350 | 0.68 | 17.26 | 92.0 | 2.3 |
| 11 | 44g water added at the beginning. 16.5g J70 made to 125g with water, of which 37.5g added in the beginning. Rest added in 12g doses till 30 minutes. 55g water added during grinding. | 1% active J70 Incremental addition of water. 9,10 & 11 are same | 424 | 42 | 350 | 0.65 | 20.85 | 92.5 | 2.2 |
| 12 | 244g water added at the beginning. 18.3g BTC2 made to 125g with water, of which 37.5g added in the beginning. Rest added in 12g doses till 30 minutes. 90g water added during grinding. | 1% active BTC2 Incremental addition of water. Similar to 8 | 459 | 45 | 350 | 0.65 | N/A | 92.6 | 2.1 |

| | | | | | | | | | |
|---|---|---|---|---|---|---|---|---|---|
| N/A = Not Analysed | | | | | | | | | |

**Table 1B - Viscosities of brucite slurries**

| No. | Dispersant | dso (µm) | 73 wt.% Solid | | | | 70 wt.% Solid | | | |
|---|---|---|---|---|---|---|---|---|---|---|
| | | | Measured Solid Content | T₀ (mPas) | T₁ (mPas) | T₂₄ (mPas) | Measured Solid Content | T₀ (mPas) | T₁ (mPas) | T₂₄ (mPas) |
| 8 | 1% BTC2 | 0.85 | 73.35 | 415 | 720 | 2900 | 69.98 | 420 | 660 | 600 |
| 9 | 1% J70 | 1.00 | 73.46 | 305 | 420 | 2200 | 69.83 | 310 | 450 | 380 |
| 10 | 1% J70 | 0.68 | 73.63 | 555 | 960 | 3950 | 69.70 | 530 | 760 | 720 |
| 11 | 1% J70 | 0.68 | 73.54 | 705 | 1280 | 5000 | 70.01 | 630 | 990 | 1040 |

Test procedures 1 and 2 in the above Table show that the Calgon is not a suitable dispersant for high grinding of brucite. The final product obtained was highly viscous.

Comparison between test procedures 8 and 12 (BTC as dispersant) versus Experiment 9-11 (J70 as dispersant) show that BTC2 and J70 perform equally well. In both the cases, the particle size (d₅₀) of the end product and the viscosities of the slurry are quite comparable.

Comparison between test procedures 3, 4, 7, 8 and 12 show that best results in terms of particle size are obtained when the 33% of the dispersant is added at the beginning of the grinding and the rest during grinding. The visual inspection of the slurry during grinding also showed better flow when the dispersant was added in instalments.

From the results it may be concluded that:
1. It seems possible to carry out high solids grinding of brucite.
2. Among the different dispersants tried, semineutralised sodium polyacrylate (J70) and BTC2 gave the best performance.
3. The best results were obtained when 33% of the dispersant was added in the beginning and the rest over the first half an hour grinding period.
4. The viscosity of the 70 wt.% and 73 wt.% slurry was within acceptable limits.

### Example 1C - Effects of pH and Dispersant on Redispersion of Sandground Brucite

A sample of brucite sandground at 200kWh/T was prepared, codenamed Brucite SG 200, having the following properties:

| Sample | Sedigraph d₅₀ (µm) | Cilas d₅₀ (µm) | ISO | | | | |
|---|---|---|---|---|---|---|---|
| | | | Vio | Yel | L* | A* | B* |
| Brucite SG 200 | 0.65 | 1.62 | 92.9 | 1.3 | 97.6 | 0.11 | 0.77 |

### Effect of pH upon the dispersion of brucite.

The sandground brucite (25g) was mixed with 475g of distilled water, and subjected to 30 seconds of Silverson mixing. This was subsequently split into 5 aliquots. The natural pH of this brucite in distilled water was pH 9.9. Additions of ammonium hydroxide and sulphuric acid varied the pH of the brucite. The state of dispersion was assessed after a period of 30 minutes had elapsed. If there was a visible flocculated level of brucite with clear supernatant then this was classed as "flocculated". If after 30 minutes there was no clear supernatant, the slurry looked uniform in density, and there was a residue, then this was classified as "deflocculated". Table 2 summarises the findings.

**Table 2. Effect of pH upon dispersion of fine brucite**

| **pH of Brucite** | **State of dispersion** |
|---|---|
| 7.9 | flocculated |
| 8.5 | flocculated |
| 9.9 | flocculated |
| 10.5 | flocculated |
| 11.0 | flocculated |

The results show that the pH of the brucite slurry has no obvious effects on the state of dispersion. The amount of clear supernatant was the same for all five samples.

Polyacrylate and hexametaphosphate dispersants were tested, both individually and together.

### Effect of polyacrylate upon the dispersion of brucite.

Two polyacrylates were investigated, DP2695 sodium polyacrylate (Ciba) and A40 ammonium polyacrylate (M&J Polymers). These were added incrementally to the brucite. The brucite was at its natural pH of 9.9. The sandground brucite (25g) was mixed with 475g of distilled water, and subjected to 30 seconds of Silverson mixing. The results are shown in Table 3.

**Table 3. Effect of polvacrvlate upon dispersion of fine brucite.**

| **Polyacrylate dose Wt%** | **State of dispersion** | |
|---|---|---|
| | **DP2695** | **A40** |
| 0.1 | flocculated | Flocculated |
| 0.2 | flocculated | Flocculated |
| 0.4 | flocculated | |
| 0.6 | flocculated | |
| 0.8 | | |
| 1.2 | de-flocculated | |
| 1.6 | de-flocculated | Flocculated |
| 2.0 | de-flocculated | |
| 2.4 | | de-flocculated |
| 3.0 | | |
| 4.0 | | |

It can be seen that the brucite can be dispersed by using either 1.2 wt% DP2695 or 2.4 wt% A40.

### Effect of sodium hexametaphosphate (Calgon) upon dispersion of brucite.

The sandground brucite was mixed with distilled water, and subjected to 30 seconds of Silverson mixing. The brucite was at its natural pH of 9.9.

Various doses of Calgon were added to each slurry and allowed to stand for 30 minutes. Table 4 summarises the results.

**Table 4. Effect of sodium hexametaphosphate upon dispersion of fine brucite.**

| **Calgon dose wt%** | **State of Dispersion** |
|---|---|
| 0.1 | Flocculated |
| 0.2 | Flocculated |
| 0.4 | Flocculated |
| 0.6 | Flocculated |
| 1.2 | De-flocculated |
| 1.6 | De-flocculated |
| 2.0 | De-flocculated |

These results show that a dose of 1.2 wt% sodium hexametaphosphate will disperse the fine brucite. Further studies could lower this dose (between 0.6 and 1.2 wt%).

### Effect of sodium hexametaphosphate (Calgon) and sodium polyacrylate (DP2695) upon dispersion of brucite

The sandground brucite was mixed with distilled water, and subjected to 30 seconds of Silverson mixing. The brucite was at its natural pH of 9.9.

Various doses of Calgon and DP2695 were added to each slurry and allowed to stand for 30 minutes. Table 5 summarises the results.

**Table 5. Effect of sodium hexametaphosphate (Calgon) and DP2695 upon dispersion of brucite.**

| **DP2695 dose wt%** | **Calgon dose wt%** | **Dispersion state** |
|---|---|---|
| 1.2 | 0.6 | De-flocculated |
| | 0.8 | De-flocculated |
| | 1.0 | De-flocculated |
| | 1.2 | De-flocculated |
| 0.8 | 0.6 | De-flocculated |
| | 0.8 | De-flocculated |
| | 1.0 | De-flocculated |
| | 1.2 | De-flocculated |
| 0.6 | 0.6 | De-flocculated |
| | 0.8 | De-flocculated |
| | 1.0 | De-flocculated |
| | 1.2 | De-flocculated |
| 0.4 | 0.6 | De-flocculated |
| | 0.8 | De-flocculated |
| | 1.0 | De-flocculated |
| | 1.2 | De-flocculated |
| 0.2 | 0.6 | Flocculated |
| | 0.8 | flocculated |
| | 1.0 | flocculated |
| | 1.2 | flocculated |
| 0.1 | 0.6 | Flocculated |
| | 0.8 | flocculated |
| | 1.0 | flocculated |
| | 1.2 | flocculated |

It can be seen that a combination of DP2695 and Calgon gives good dispersion at relatively low doses, i.e. lowest dose of the dual system was 0.4 wt% DP 2695 and 0.6 wt% Calgon.

### Conclusions

All four dispersion systems studied here produced a dispersed slurry at a certain dose but the dispersed slurry in each case did not produce a hard sediment that is characteristic of a well dispersed system. It can be concluded that: (a) fine brucite will not naturally disperse at the pH range covered in this study; (b) sodium polyacrylate will disperse the fine brucite at a dose of 1.2 wt%; (c) ammonium polyacrylate can disperse the brucite but a high dose is required, for example around 2.4 wt%; (d) sodium hexametaphosphate (Calgon) deflocculates the fine brucite at a dose of 1.2 wt%; (e) a combination of DP2695 and Calgon disperses the fine brucite; and (f) high solids grinding and refining can be investigated using a dispersed Brucite.

### Example 2 - Hydrocyclone Classification of Comminuted Brucite

### Preparation of Brucite

Chinese (Liujiahe) brucite from Dandong Jinjuan Mineral Company Ltd, China, had previously been low solids, chemically free, Carbolite wet ground to 200kWh/tonne energy input. Properties of this wet milled brucite can be found in Table 6.

**Table 6. Properties of brucite**

| Sample | Vio ISO | Yel ISO | CILAS d₅₀ (µm) | BET m²/g | SEDIGRAPH d₅₀ (µm) |
|---|---|---|---|---|---|
| 200kWh/t | 91.2 | 2.0 | 2.2 | 14.1 | 0.7 |

This fine brucite was dispersed by adding a mixture of lwt.% sodium polyacrylate and 1 lwt.% Calgon. This was required to be able to measure the particle size of the brucite.

### Hydrocyclone Classification

The classification of the brucite was carried out by using a small scale hydrocyclone rig. 25 litres of the undispersed, 18.5wt% low solids ground brucite was used each time. This ground brucite was subjected to various cyclone set up regimes. The size of cyclone was varied, as well as the vortex finder and spigot configurations.

The parameters are summarised in Table 7.

The brucite was passed through the hydrocyclone and both the over flow and underflow was analysed. Flow rate and the solids content of both streams were measured.

**Table 7. Hydrocyclone parameters**

| Size of hydrocyclone | Vortex finder | Spigot |
|---|---|---|
| 2 inch | 14.3 | 6.3 |
| 1 inch | 5.5 | 5.1 |
| 1 inch | 5.5 | 3.3 |
| 1 inch | 3.0 | 4.5 |
| 1 inch | 3.0 | 3.3 |
| 1 inch | 3.0 | 2.2 |
| 10 inch | Fixed | |

### Results

Tables 8 and 9 show the results of passing the brucite through the 2 inch and 1 inch hydrocyclones. Table 10 shows the results of passing the brucite through the 10mm hydrocyclone.

Table 8 shows the initial passes through the hydrocyclone rig. Flow rates were not measured, as these experiments were to investigate whether a separation could be achieved dispersant free. The results show there was a definite difference between the overflows and underflows for the three experimental conditions employed. The overflows were all finer than the feed material and the underflows were all coarser than the feed material.

Tables 9 and 10 additionally show the % volume split between the underflow and the overflow of each experiment, as well as the flow rates. Again the same trends are observed for the two flow streams as found in Table 8.

It can be seen that "passing 100%" can be lowered from 18µm passing 100% for the feed to 12µm passing 100%. This value shows that the top cut can be lowered quite considerably using the hydrocyclone (18µm down to 12µm).

### Conclusions

It is concluded that brucite can be passed through a hydrocyclone dispersant-free, that significant separations can be made using a laboratory hydrocyclone, and that top size can be altered by using a hydrocyclone.

**Table 8**

| | SEDIGRAPH | | | | | | | | | CILAS | | | | | | | | |
|---|---|---|---|---|---|---|---|---|---|---|---|---|---|---|---|---|---|---|
| | Wt.% finer than | | | | | | | | | Wt.% finer than | | | | | | passing | d₅₀ | d₉₀ |
| | 10 | 5 | 2 | 1 | 0.5 | 0.25 | Wt.% solids | Vortex finder | Spigot | 10 | 5 | 2 | 1 | 0.5 | 0.2 | 100% | µm | µm |
| FEED | 99.2 | 98.6 | 87 | 60.9 | 36.2 | 22.5 | 18.8 | | | 97.7 | 82.5 | 44.8 | 20.5 | 7 | 2.1 | 18 | 2.28 | 6.46 |
| | | | | | | | | | | | | | | | | | | |
| 2" O/F | 99.8 | 99.3 | 89.7 | 61.9 | 33.2 | 21.3 | 19.3 | 14.3 | 6.3 | 98 | 83.8 | 45.5 | 20.8 | 7.4 | 2.22 | 15 | 2.23 | 6.2 |
| 2" U/F | 96.2 | 94.8 | 83.3 | 56.8 | 32.8 | 20.1 | 20.2 | 14.3 | 6.3 | 96.7 | 80.4 | 42.2 | 18.9 | 6.5 | 2 | 18 | 3.21 | 6.76 |
| | | | | | | | | | | | | | | | | | | |
| 1" O/F | 99.9 | 99 | 88.8 | 62.3 | 36.7 | 23.1 | 18.2 | 5.5 | 5.1 | 98.3 | 85.2 | 46.9 | 21.4 | 7.3 | 2.2 | 15 | 2.15 | 5.92 |
| 1" U/F | 98.6 | 97.8 | 86.3 | 58.3 | 34.4 | 21.5 | 19.5 | 5.5 | 5.1 | 96.4 | 80.1 | 41.9 | 18.7 | 6.4 | 1.9 | 18 | 2.45 | 6.87 |
| | | | | | | | | | | | | | | | | | | |
| 1" O/F | 99.8 | 99.6 | 91.4 | 65.3 | 32.2 | 19.8 | 18.4 | 5.5 | 3.3 | 99.4 | 85.7 | 47 | 21.9 | 7.7 | 2.3 | 12 | 2.15 | 5.77 |
| 1" U/F | 98.7 | 97.5 | 89.6 | 64.9 | 28 | 17.7 | 19.8 | 5.5 | 3.3 | 96.3 | 79.9 | 41.8 | 18.7 | 6.3 | 1.9 | 18 | 2.46 | 6.89 |

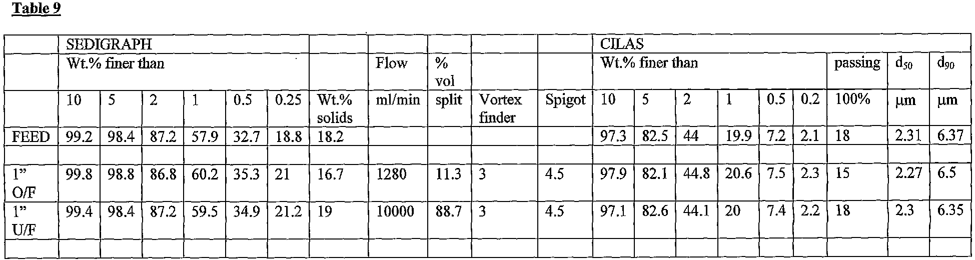

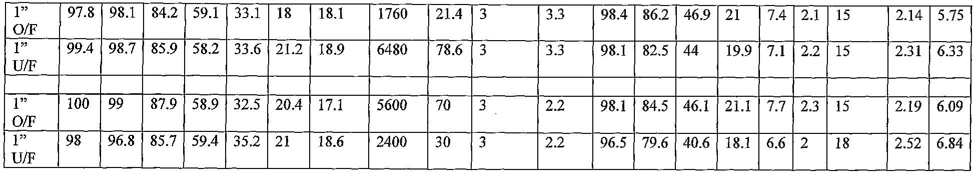

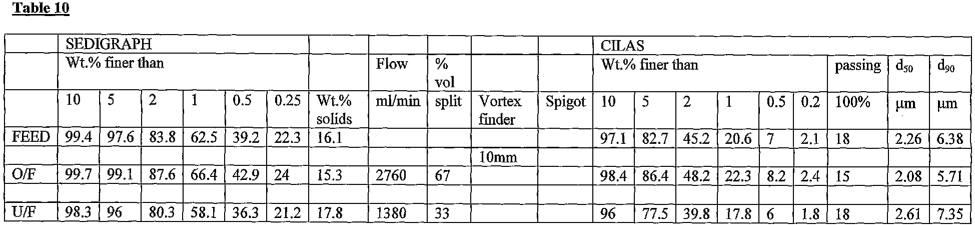

### Example 3 - Magnetic Beneficiation of Comminuted Brucite (according to the invention) and Comparative Studies

Three brucites, identified as "Greyish", "Black" and "Brown", from the Dandong Jinshan Mineral Company (Jiguanshan, Fengcheng, Liaonin Province, China) were initially evaluated for asbestos fibre content. The findings, shown in Table 11 below, indicate that the Greyish and Black Brucite both exceed the acceptable limit of 0.3 fibres/ml.

**Table 11 - Fibre levels of Brucites**

| Sample | Fibre levels (fibre/ml of air at a dust level of 10mg/m³) |
|---|---|
| Greyish | Approx. 1.2 |
| Black | Approx. 5.2 |
| Brown | 0.189 |

In this Example, the possibilities of reducing the fibre levels in the brucites are explored by dry milling, wet media grinding and magnetic separation.

### Sample Preparation

This study used the Greyish and Black Brucites (the Brown Brucite was already within the acceptable fibre level). These were initially jaw crushed and then Raymond milled to produce a fine powder to use as a feed to the wet grinder and to pass through the super conducting magnet. These two brucites exceeded the safe working fibre level. Strict Health and Safety procedures were adhered to, to reduce the risk of exposure.

### Stirred Media Grinding

The Black and Greyish Brucites were ground using Carbolite ceramic media (16/20 grade) with a work input of 200kWh/T. The recipe for the grinding was: 13kg Carbolite 16/20 media; 1224g Raymond milled Brucite; 4322g Tap Water.

The brucites were screened at 53µm, prior to filtration and drying at 80°C.

### Magnetic Separation

The Raymond milled and wet ground brucites were made into 12wt% solids slurries using tap water. To each of the slurries was added lwt.% BTC2 (sodium polyacrylate) and lwt.% Calgon (sodium hexametaphosphate) as dispersants. The dispersants provided adequate dispersion for the slurries.

The dispersed brucite slurries were passed through the pilot super conducting magnet at the Gothers pilot plant. The magnet was set up to produce a 5 Tesla magnetic field and a slurry flow rate of 1464mls per minute. These conditions imitate full scale plant conditions.

After magnetisation, the dispersed slurries were passed once through a wire wool filed canister, and the magnet product and magnetics were then collected. The two different fractions were analysed for colour, particle size and fibre content.

### Results

Table 12 summarises the optical and physical properties of the magnetically separated brucites. RM = Raymond Milled. SG = Sand Ground. "As rec'd" = As received (i.e. unprocessed starting material as obtained from the mining company).

The recoveries are poor for the Raymond milled material. This could be due to a physical separation process with the wire wool acting as a filter. This gave a 2-3 unit gain in ISO powder brightness. The recoveries of about 90% for the wet ground material gave 1-2 unit gains in ISO brightness. The BET surface area shows that for the wet ground materials the product is finer than the feed, indicating that the coarse material is being taken out by the magnet.

**Table 12 - Properties of magnetted brucites**

| Sample | Fraction | Recovery Wt.% | ISO Vio | ISO Yel | BET m²/g | SEDIGRAPH d₅₀ (µm) | CILAS d₅₀ (µm) |
|---|---|---|---|---|---|---|---|
| RM Grey Brucite | As rec'd | 100 | 92.6 | 1.0 | 3.3 | | |
| | Product | 44.0 | 94.5 | 1.0 | | | 3.2 |
| | Magnetics | 56.0 | 89.6 | 1.8 | | 4.0 | 6.9 |
| SG Grey Brucite | As rec'd | 100 | 93.6 | 0.9 | 14.1 | | |
| | Product | 91.6 | 94.6 | 1.2 | 18.0 | 0.5 | 1.9 |
| | Magnetics | 8.4 | 84.0 | 4.0 | 9.0 | | |
| RM Black Brucite | As rec'd | 100 | 89.3 | 0.8 | 3.5 | | |
| | Product | 41.8 | 92.9 | 0.9 | | 7.0 | 3.6 |
| | Magnetics | 58.2 | 87.5 | 1.5 | 2.4 | 4.0 | 5.5 |
| SG Black Brucite | As rec'd | 100 | 91.7 | 0.9 | 13.6 | | |
| | Product | 88.6 | 93.6 | 1.2 | 15.9 | 0.6 | 1.6 |
| | Magnetics | 11.4 | 83.6 | 2.0 | 7.9 | | |

Certain samples were analysed by microscopy for fibre content. The results are shown in Table 13.

**Table 13 - Fibre levels of processed brucites**

| Sample | Fibre levels (fibre/ml of air at a dust level of 10mg/m³) |
|---|---|
| Greyish as rec'd | 1.2 |
| Greyish Raymond milled | 1.2 |
| Greyish Raymond milled, magnetted product | 1.9 |
| | |
| Greyish as rec'd | 1.2 |
| Greyish SG 200kWh/t | 0.46 |
| Greyish SG 200kWh/t, magnetted product | 0.64 |
| | |
| Black as rec'd | 5.2 |
| Black SG 200 kWh/t | 1.6 |
| Black SG 200 kWh/t, magnetted product | 1.7 |

These results show that Raymond milling the Greyish Brucite does not reduce the fibre content. Wet grinding with Carbolite does have an effect on the fibres. Fibre levels can be reduced by up to 70% when ground for 200kWh/t. However, the grinding does not lower the fibre level to within safe working limits. Magnetic separation of either the Raymond milled material or the wet media ground material does not appear to reduce the asbestos fibre level.

### Conclusions

Carbolite grinding (200kWh/tonne) appears to reduce the asbestos fibre level in the Dandong Jinshan Brucite by up to 70%. Raymond milling appears to have no effect on the fibre levels within the samples. Magnetic separation of either the Raymond milled material or the Carbolite ground material does not appear to reduce the asbestos fibre level. Magnetic separation of the Raymond milled Brucites produces a brightness lift of about 2 units but the yields are very poor.

Magnetic separation of the Carbolite ground 200kWh/tonne brucites increases the brightness by up to 3 units with various yields.

### Comparative Example - Investigation into Alternative Potential Methods of Beneficiation of Brucite to Improve Brightness

The brucite material used for this investigation was from Dalian, China. The properties of the rough ground material as received are shown in Table 14.

**Table 14 - Properties of rough ground Brucite**

| ISO Brightness | | Surface Area (m²/g) | CaO | MgO | Fe₂O₃ | AIR | ppm Mn |
|---|---|---|---|---|---|---|---|
| Violet | Yellow | | | | | | |
| 93.3 | 1.5 | 5.3 | 0.74 | 63.18 | 0.14 | 5.89 | 168.3 |

This Chinese brucite was received as lumps of rock about the size of standard house bricks. The brucite rocks were crushed using a Glen Creston Ltd 18-501 jaw crusher to produce brucite chips of about 20mm or finer. These chips were then milled in a Christy Norris disc mill to produce a coarse powder of a size of about 0.5mm - 0.25mm or below. This coarse powder was screened to produce fractions of <106µm +38µm and <53µm +38µm.

The following alternative beneficiation methods were attempted, in order to improve the brightness: washing, reductive bleaching and oxidative bleaching, in each case with particle size selection or adjustment as described below.

### Washing

The jaw-crushed brucite of 20mm and finer was used for this set of experiments. The 20mm rocks were soaked for 30 minutes in 60°C water. They were then filtered on a brucite filter using NO filter paper so that the fines would be separated from the coarse material. The material was then dried in an oven at 80°C, milled and powder brightness was measured. Table 15 shows the results of washing.

**Table 15 - Effect of hot washing coarse brucite**

| Sample | Violet ISO | Yellow ISO |
|---|---|---|
| As rec'd | 92.2 | 2.2 |
| Hot wash coarse | 92.8 | 2.0 |
| Hot wash fines | 91.5 | 2.5 |

It can be seen that hot washing improves the brightness slightly but this could also just be the effect of taking out the fine material.

### Bleaching and <106µm +38µm Processing

The effect of reductive and oxidative bleaching was carried out on the <106µm +38µm fraction of brucite. Sodium dithionite (Hydros), formamidine sulfinic acid (FAS) and ozone were all evaluated.

The various amounts of hydros were added to the brucite at a pH of 7.5. This was allowed to soak for 30 minutes and then the brucite was filtered. See Table 16.

The FAS was added to the brucite at its natural pH but at an elevated temperature of 70°C. This was stirred for 30 minutes. See Table 17.

The ozone was added for 120 minutes and then purged with oxygen for 30 minutes. See Table 18.

All samples after their respective bleaching process were dried at 80°C and submitted for powder brightness.

**Table 16 - Effect of Hydros on -106 +38µm Brucite**

| Hydros dose wt% | Violet ISO | Yellow ISO |
|---|---|---|
| 0 | 89.8 | 2.1 |
| 0.2 | 89.4 | 1.9 |
| 0.4 | 89.1 | 2.4 |
| 0.6 | 90.1 | 2.0 |
| 0.8 | 90.2 | 1.7 |
| 1.0 | 90.1 | 2.2 |

It can be seen that hydros up to lwt.% has very little effect on the -106 +38µm Brucite. There is up to a 0.4 unit gain but this may be due to experimental error.

**Table 17 - Effect of FAS on -106 +38µm Brucite**

| FAS dose wt% | Violet ISO | Yellow ISO |
|---|---|---|
| 0 | 90.8 | 1.8 |
| 0.02 | 90.3 | 2.1 |
| 0.04 | 90.4 | 2.0 |
| 0.06 | 89.4 | 2.6 |
| 0.08 | 90.0 | 2.3 |
| 0.10 | 89.5 | 2.4 |

It can be seen that FAS up to 0.1wt.% has very little effect on the -106 +38µm Brucite. There is no improvement on the powder brightness.

**Table 18 - Effect of Ozone on -106 +38µm Brucite**

| Ozone dose, minutes | Violet ISO | Yellow ISO |
|---|---|---|
| 0 | 90.8 | 1.8 |
| 120 | 89.1 | 2.2 |

Ozone has a detrimental effect on the -106µm +38µm Brucite. The powder brightness decreases by 1.7 units.

### Bleaching and <53µm +38µm Processing

Hydros bleaching was investigated on this size fraction. Hydros was added as described above. The results are summarised in Table 19.

**Table 19 - Effect of Hydros on -53µm +38µm Brucite**

| Hydros dose wt% | Violet ISO | Yellow ISO |
|---|---|---|
| 0 | 91.1 | 2.0 |
| 0.2 | 91.0 | 2.0 |
| 0.4 | 90.5 | 2.2 |
| 0.6 | 91.0 | 1.8 |
| 0.8 | 90.9 | 1.9 |
| 1.0 | 91.1 | 1.7 |

These results show there is no effect on colour when up to 1wt.% hydros is added to the brucite.

### Wet Milling and Hydros and Ozone Bleaching

A standard laboratory sandgrinder was used for comminution of the brucite. The sandgrinder was charged with 3kg of ceramic grinding media-Carbolite 16-20. 1224g of brucite and 4322g of tap water (equivalent to 22wt% solids slurry) was used. The charge was stirred until 50kWh/tonne of energy was put into the system.

The sand-ground brucite was screened at 53 µm to separate the grinding media and mineral. The resultant -53µm slurry was filtered on a Buchner filter using a Whatman grade 50 filter paper. When filtered, the filter cake was dried in a laboratory oven at 80°C.

Hydros bleaching and ozonation was performed on the ground product. The results are shown in Table 20.

**Table 20 - Effect of Hydros and ozone on wet ground 50kWh/tonne brucite.**

| Ozone dose, minutes | Hydros dose, wt.% | Violet ISO | Yellow ISO |
|---|---|---|---|
| 0 | 0 | 93.7 | 0.9 |
| 0 | 0.2 | 94.0 | 0.8 |
| 0 | 0.4 | 93.4 | 0.9 |
| 0 | 0.6 | 92.3 | 1.2 |
| 0 | 0.8 | 93.6 | 0.9 |
| 120 | 0 | 94.2 | 0.9 |

Hydros has very little effect on the brucite. Ozone increases the brightness by 0.5 units, but this may fall within experimental error.

We conclude from this comparative example that Hydros up to 1wt% has no effect to improve the brucite brightness, that FAS does not improve the brightness of brucite, and that ozone has little effect on the brightness of the brucite. These findings are helpful to show the difficulties in improving the brightness of brucite, and hence the significance of the results obtained using the present invention.

### Industrial Applicability

The methods for preparing ground, beneficiated brucite in accordance with the present invention provide improved optical properties which increase its suitability for use as fire retardant filler in polymeric applications, such as fire retardant cable sheathing. In addition, a marked reduction in the levels of asbestos or other mineral fibres is observed.

The present invention has been described broadly and without limitation to specific embodiments. Variations and modifications as will be readily apparent to those of ordinary skill in this art are intended to be included within the scope of this application.

## Claims

1. A method for preparing particulate brucite comprising grinding and beneficiating particulate brucite wherein the ground beneficiated particulate brucite has a d₉₀ of less than or equal to 6.4µm as measured by laser light scattering and wherein the brightness of the particulate magnesium hydroxide is improved, wherein the beneficiation comprises dispersing the ground or pre-ground particulate brucite in a fluid carrier medium to produce a dispersion; introducing the dispersion into a magnetic field of sufficient field strength to magnetise ferric components of the particulate brucite; removing the dispersion from the magnetic field and placing the dispersion in sufficiently close proximity to a magnetic or magnetisable material that the said ferric components of the dispersion are concentrated in the vicinity of the magnetic or magnetisable material; and thereafter separating the said concentrated ferric components from the remainder of the dispersion.

2. A method according to claim 1, wherein beneficiation of the brucite takes place before and/or during and/or after the particulate brucite is ground.

3. A method according to any one of the previous claims, wherein the brucite to be ground has a top size of particles which is coarser than a desired top size, and is ground in contact with an aqueous medium in the presence of at least one particulate grinding medium under conditions such that the energy input is in excess of 20 kWh/tonne, wherein the particulate brucite having a top size of particles which is coarser than the desired top size is present in a weight excess relative to the water of the aqueous medium.

4. A method according to any one of the previous claims, wherein the ground particulate brucite has a d₉₀ less than or equal to 2µm as measured by laser light scattering and a d₅₀ less than or equal to 0.5µm as measured by laser light scattering.

5. A method according to any one of the previous claims, wherein the ground particulate brucite comprises less than 0.1 asbestos fibres or other mineral fibres per ml of air at a total dust level of 10 mg/m³.

6. A method according to any one of the previous claims wherein the ground particulate brucite possesses a moisture pick up value over 7 days of less than 15%, for example of less than 6%.

7. A method according to any one of the previous claims further comprising classifying the particulate brucite including top size particles in a certain size range so as to remove said top size particles in the said certain size range, the method comprising suspending the material in an aqueous medium to form a particulate suspension of the brucite, introducing a stream of the said particulate suspension into a hydrocyclone apparatus to create a vortex flow in the apparatus, and removing from the apparatus a first discharged stream comprising relatively large particles and a second discharged stream comprising relatively small particles, namely small relative to the particles of the first discharged stream and recovering the classified particulate magnesium hydroxide free of the said top size particles from the second discharged stream.

8. A method according to claim 7, wherein the said certain size range is from 12 to 18 µm or from 15 to 18µm as measured by laser light scattering.

9. A method according to any one of claims 7 or 8, when performed in the absence of a dispersing agent.

10. A method of providing a particulate filler material for use in a polymeric composition comprising combining said brucite provided from a method in accordance with any one of the previous claims with one or more other particulate inorganic materials.

11. A method according to the previous claim, wherein the filler is provided for use in the form of a substantially dry powder.

12. A method according to any one of claims 10 or 11, wherein the one or more other particulate materials have flame retardant properties and are present with the particulate brucite in a flame- retardant amount.

13. A method according to any one of claims 10 to 12, comprising forming the polymer composition into an article, wherein the article is selected from a work surface, for example, a counter work surface, or a sheath, coating or housing for an electrical product, for example a sheath component of an electrical cable.

14. A method according to any one of claims 10 to 13, wherein the polymeric composition is formed by mixing the components of the composition, the polymer component being present for the mixing as liquid or particulate solid, and optionally one or more precursors of the polymer.

## Patentansprüche

1. Verfahren zur Herstellung von Brucit-Partikel, umfassend das Mahlen und Anreichern von Brucit-Partikeln, wobei die durch Laserlichtstreuung gemessenen gemahlenen und angereicherten Brucit-Partikel ein d₉₀ von weniger oder gleich 6,4 µm aufweisen, wobei die Helligkeit der Magnesiumhydroxid-Partikel zunimmt, wobei das Anreichern das Dispergieren der gemahlenen oder vorgemahlenen Brucit-Partikel in einer Trägerflüssigkeit zur Herstellung einer Dispersion umfasst; Einführen der Dispersion in ein Magnetfeld mit ausreichender Feldstärke, um die Eisenbestandteile der Brucit-Partikel zu magnetisieren; Entfernen der Dispersion aus dem Magnetfeld und Platzieren der Dispersion so nahe an einem magnetischen oder magnetisierbaren Material, dass sich die Eisenbestandteile der Dispersion in der Nähe des magnetischen oder magnetisierbaren Materials verdichten; und danach Trennen der verdichteten Eisenbestandteile vom Rest der Dispersion.

2. Verfahren gemäß Anspruch 1, wobei die Anreicherung des Brucits vor und/oder während und/oder nach dem Mahlen der Brucit-Partikel erfolgt.

3. Verfahren gemäß einem der vorhergehenden Ansprüche, wobei die gröbsten Teilchen des zu mahlenden Brucits gröber als die gröbsten gewünschten Teilchen sind und mit einem wässrigen Medium in Anwesenheit von mindestens einem partikelförmigen Mahlkörper unter solchen Bedingungen gemahlen werden, dass der Energieeintrag 20 kWh/Tonne übersteigt, wobei die gröbsten Brucit-Partikel, die gröber als die gröbsten gewünschten Teilchen sind, im Verhältnis zum Wasser des wässrigen Mediums ein größeres Gewicht aufweisen.

4. Verfahren gemäß einem der vorhergehenden Ansprüche, wobei die durch Laserlichtstreuung gemessenen gemahlenen Brucit-Partikel ein d₉₀ von weniger oder gleich 2 µm und ein durch Laserlichtstreuung gemessenes d₅₀ von weniger oder gleich 0,5 µm aufweisen.

5. Verfahren gemäß einem der vorhergehenden Ansprüche, wobei die gemahlenen Brucit-Partikel bei einem Gesamtstaubpegel von 10 mg/m³ pro Milliliter Luft weniger als 0,1 Asbestfasern oder andere Mineralfasern aufweisen.

6. Verfahren gemäß einem der vorhergehenden Ansprüche, wobei die gemahlenen Brucit-Partikel über einen Zeitraum von 7 Tagen einen Feuchtigkeitsansprechwert von unter 15% aufweisen, beispielsweise weniger als 6%.

7. Verfahren gemäß einem der vorhergehenden Ansprüche, das ferner die Klassifizierung der Brucit-Partikel, einschließlich der gröbsten Teilchen in einem bestimmten Größenbereich umfasst, um die gröbsten Teilchen in einem bestimmten Größenbereich zu entfernen, wobei das Verfahren das Suspendieren des Materials in einem wässrigen Medium umfasst, um eine Teilchensuspension des Brucits zu bilden, das Einführen eines Teilchensuspension-Stroms in eine Hydrozyklonvorrichtung umfasst, um in der Vorrichtung eine Wirbelströmung zu erzeugen und das Entfernen eines ersten Ablassstroms mit relativ großen Teilchen aus der Vorrichtung und das Entfernen eines zweiten Ablassstroms aus der Vorrichtung mit im Verhältnis zu den Partikeln des ersten Ablassstroms relativ kleinen Teilchen und die Rückgewinnung der klassifizierten Magnesiumhydroxid-Partikel aus dem zweiten Ablassstrom ohne die gröbsten Partikel umfasst.

8. Verfahren gemäß Anspruch 7, wobei der bestimmte durch Laserlichtstreuung gemessene Größenbereich zwischen 12 und 18 µm oder zwischen 15 und 18 µm liegt.

9. Verfahren gemäß einem der Ansprüche 7 oder 8, wenn es ohne Dispersionsmittel durchgeführt wird.

10. Verfahren zur Bereitstellung eines partikelförmigen Zusatzwerkstoffs, der in einer Polymerzusammensetzung verwendet werden soll, umfassend das Kombinieren von gemäß einem Verfahren gemäß einem der vorhergehenden Ansprüche zur Verfügung gestellten Brucit mit einem oder mehreren anderen partikelförmigen anorganischen Mineral bzw. Mineralien.

11. Verfahren gemäß dem vorhergehenden Anspruch, wobei der Füllstoff im Wesentlichen als Trockenlöschmittel bereitgestellt wird.

12. Verfahren gemäß einem der Ansprüche 10 oder 11, wobei ein anderes Teilchen oder mehrere andere Teilchen flammhemmende Eigenschaften aufweisen und in den Brucit-Partikeln in einer flammhemmenden Menge vorhanden sind.

13. Verfahren gemäß einem der Ansprüche 10 bis 12, umfassend das Formen der Polymerzusammensetzung zu einem Gegenstand, wobei der Gegenstand eine Arbeitsfläche, zum Beispiel eine Arbeitsplatte, oder eine Ummantelung, eine Beschichtung oder ein Gehäuse für ein elektrisches Produkt sein kann, zum Beispiel eine Ummantelungskomponente eines elektrischen Kabels.

14. Verfahren gemäß einem der Ansprüche 10 bis 13, wobei die Polymerzusammensetzung durch Mischen der Komponenten der Zusammensetzung gebildet wird, wobei die Polymerkomponente für das Mischen als Flüssigkeit oder als Feststoffteilchen und gegebenenfalls als ein Vorläufer oder als mehrere Vorläufer des Polymers vorhanden ist bzw. sind.

## Revendications

1. Un procédé de préparation de brucite particulaire comprenant broyage et enrichissement en brucite particulaire, dans lequel la brucite particulaire enrichie au sol a un d₉₀ inférieur ou égal à 6,4 µm, mesuré par diffusion de lumière laser, et dans lequel la brillance de l'hydroxyde de magnésium particulaire est améliorée, l'enrichissement comprenant la dissipation de la brucite particulaire broyée ou pré-broyée dans un milieu porteur fluide pour produire une dispersion ; introduisant la dispersion dans un champ magnétique d'intensité de champ suffisante pour magnétiser les composants ferriques de la brucite particulaire ; enlevant la dispersion du champ magnétique et plaçant la dispersion dans une proximité insuffisamment étroite d'un matériau magnétique ou magnétisable pour que lesdites composantes ferriques de la dispersion soient concentrées au voisinage du matériau magnétique ou magnétisable ; et ensuite séparant lesdits composants ferriques concentrés du reste de la dispersion.

2. Un procédé selon la revendication 1, dans lequel l'enrichissement de la brucite a lieu avant et / ou pendant et / ou après que la brucite particulaire est broyée.

3. Un procédé selon l'une quelconque des revendications précédentes, dans lequel la brucite à broyer a une taille supérieure de particules qui est plus épaisse qu'une taille supérieure désirée, et est broyée au contact d'un milieu aqueux en présence d'au moins un milieu de broyage particulaire dans des conditions telles que l'apport d'énergie dépasse 20 kWh / tonne, où la brucite particulaire ayant une taille supérieure de particules qui est plus épaisse qu'une taille supérieure désirée est présente avec un excès de poids par rapport à l'eau du milieu aqueux.

4. Un procédé selon l'une quelconque des revendications précédentes, dans lequel la brucite particulaire broyée a un d₉₀ inférieur ou égal à 2 µm tel que mesuré par une diffusion de lumière laser et un d₅₀ inférieur ou égal à 0,5 µm tel que mesuré par diffusion de lumière laser.

5. Un procédé selon l'une quelconque des revendications précédentes, dans lequel la brucite particulaire broyée comprend moins de 0,1 fibre d'amiante ou d'autres fibres minérales par ml d'air à un niveau global de poussière de 10 mg / m³.

6. Un procédé selon l'une quelconque des revendications précédentes, dans lequel la brucite particulaire broyée possède une valeur d'absorption d'humidité sur 7 jours inférieure à 15 %, par exemple inférieure à 6 %.

7. Un procédé selon l'une quelconque des revendications précédentes, comprenant en outre la brucite particulaire composée des particules de taille supérieure dans une certaine plage de taille de façon à éliminer lesdites particules de taille supérieure dans ladite plage de taille déterminée, le procédé comprenant la suspension du matériau dans un milieu aqueux pour former une suspension particulaire de la brucite, introduisant un courant de ladite suspension particulaire dans un appareil hydrocyclone pour créer un écoulement tourbillonnaire dans l'appareil, et retirant de l'appareil un premier courant déchargé comprenant des particules relativement grosses et un second courant déchargé comprenant des particules relativement petites, à savoir petites par rapport aux particules du premier courant déchargé et récupération de l'hydroxyde de magnésium particulaire classé exempt desdites particules de taille supérieure à partir du second courant déchargé.

8. Un procédé selon l'une quelconque des revendications 7, dans lequel ladite plage de certaines dimensions va de 12 à 18 µm ou de 15 à 18 µm, mesurée par diffusion de la lumière laser.

9. Un procédé selon l'une quelconque des revendications 7 ou 8, lorsqu'il est effectué en l'absence d'un agent dispersant.

10. Un procédé de fourniture d'un matériau de remplissage particulaire à utiliser dans une composition polymère comprenant la combinaison de ladite brucite fournie par un procédé selon l'une quelconque des revendications précédentes avec un ou plusieurs autres matériaux inorganiques particulaires.

11. Un procédé selon la revendication précédente, dans lequel la charge est prévue pour une utilisation sous la forme d'une poudre sensiblement sèche.

12. Un procédé selon l'une quelconque des revendications 10 ou 11, dans lequel le ou les autres matériaux particulaires ont des propriétés ignifuges et sont présents avec la brucite particulaire dans une quantité ignifugeante.

13. Un procédé selon l'une quelconque des revendications 10 à 12, comprenant la formation de la composition de polymère dans un article, dans lequel l'article est choisi parmi une surface de travail, par exemple une surface de travail ou une gaine, un revêtement ou un boîtier pour un produit électrique, par exemple un composant de gaine d'un câble électrique.

14. Un procédé selon l'une quelconque des revendications 10 à 13, dans lequel la composition polymère est formée par mélange des constituants de la composition, le composant polymère étant présent pour le mélange sous forme liquide ou solide particulaire et éventuellement un ou plusieurs précurseurs du polymère.
